# EUROPEAN PATENT SPECIFICATION

(11) **EP 2 846 239 B1**
(45) Date of publication and mention of the grant of the patent: **03.01.2018**
(21) Application number: 14182792.3
(22) Date of filing: 29.08.2014
(51) Int. Cl.: G06F 1/16, G06F 3/0488

(54) **Apparatus and method for executing function in electronic device**
Vorrichtung und Verfahren zur Ausführung von Funktionen in einer elektronischen Vorrichtung
Appareil et procédé d'exécution de fonction dans un dispositif électronique

(30) Priority: 04.09.2013 KR 20130106164
(43) Date of publication of application: 11.03.2015
(73) Proprietor: Samsung Electronics Co., Ltd., Gyeonggi-do 443-742 (KR)
(72) Inventor: Ryu, Seung-Tae, 443-742 Gyeonggi-do (KR); Kim, Il-Kwon, 443-742 Gyeonggi-do (KR); Jin, Yong-Hoon, 443-742 Gyeonggi-do (KR)
(74) Representative: Nederlandsch Octrooibureau

(56) References cited:
- US-A1- 2012 194 448
- US-A1- 2013 076 614
- US-A1- 2013 181 935
- SCOTT SAPONAS T ET AL: "PocketTouch", PROCEEDINGS OF THE 24TH ANNUAL ACM SYMPOSIUM ON USER INTERFACE SOFTWARE AND TECHNOLOGY : OCTOBER 16 - 19, 2011, SANTA BARBARA, CA, USA, ACM, NEW YORK, NY, 16 October 2011 (2011-10-16), pages 303-308, XP058006127, DOI: 10.1145/2047196.2047235 ISBN: 978-1-4503-0716-1
- "Product Manual 1129 -Touch Sensor", , 5 November 2009 (2009-11-05), XP055156079, Retrieved from the Internet: URL:http://www.robotshop.com/media/files/p df/product-manual-1129.pdf [retrieved on 2014-12-01]

## Description

### BACKGROUND OF THE INVENTION

### 1. Field of the Invention:

The present disclosure relates to an electronic device. More particularly, the present disclosure relates to an apparatus and a method for executing a function in an electronic device.

### 2. Description of the Related Art:

Electronic devices, such as a smart phone, a Personal Computer (PC), and a tablet PC, provide users with various useful functions through various applications. Accordingly, the electronic device has evolved to a device capable of using various types of information in addition to a voice call function through provision of various functions. For example, when the electronic device is coupled with a cover, the electronic device may execute a specific function such as displaying a home screen or playing video through a part of an entire screen.

However, functions that can be executed through a part of an entire screen are limited due to a small display area. In addition, a user experiences inconvenience in manipulating the electronic device through the small display area. Furthermore, in order to execute various functions, the user should open the cover and input a gesture to the screen of the electronic device.

Accordingly, a need exists for executing various functions of the electronic device even when the cover of the electronic device is closed.

The above information is presented as background information only to assist with an understanding of the present disclosure. No determination has been made, and no assertion is made, as to whether any of the above might be applicable as prior art with regard to the present disclosure

US 2013 / 181 935 A1 discloses an electronic device equipped with a touch screen that can be covered by a cover. The cover includes a transparent area that reveals a part of the touch screen showing a graphical user interface while the cover is covering the touch screen. A second part of the cover is equipped with capacitive touch point pass-through structures which allow a user to perform touch input detected by the touch screen through the closed cover. The user can provide gesture input through said second part of the cover that causes execution of corresponding commands. US 2012 / 194 448 A1 discloses a tablet computer with a cover. The cover is provided with a thin flexible display, separate from the display of the tablet computer, for displaying information related to applications on the tablet computer.

US 2013 / 076 614 A1 discloses another tablet computer with a cover. The cover is provided with passive information elements. The tablet computer can detect these elements when the cover is in closed position.

The article "PocketTouch: Through-Fabric Capacitive Touch Input" by Saponas, Harrison and Benko, published at UIST'11, October 2011, discloses a capacitive sensing prototype that enables multi-touch input on a handheld device through layers of clothing fabric and the like.

### SUMMARY OF THE INVENTION

The invention is defined by the independent claims. Additional aspects of the invention are specified in the dependent claims. Other aspects, advantages, and salient features of the disclosure will become apparent to those skilled in the art from the following detailed description, which, taken in conjunction with the annexed drawings, discloses various examples of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates an external appearance of an electronic device coupled with a cover according to an example of the present disclosure;
FIGS. 2A, 2B, 2C, and 2D illustrate screens on which various functions of an electronic device are executed according to various examples of the present disclosure;
FIG. 3 is a flowchart illustrating a method of executing a function of an electronic device according to a first example of the present disclosure;
FIG. 4 is a flowchart illustrating a method of executing a function of an electronic device according to a second example of the present disclosure;
FIG. 5 illustrates screens on which a function of an electronic device is executed according to an example of the present disclosure;
FIG. 6 is a flowchart illustrating a method of executing a function of an electronic device according to a third example of the present disclosure;
FIG. 7 is a flowchart illustrating a method of executing a function of an electronic device according to a fourth example of the present disclosure; and
FIG. 8 is a block diagram of an electronic device according to an example of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various examples of the present disclosure as defined by the claims. It includes various specific details to assist in that understanding but these are to be regarded as merely exemplary. Accordingly, those of ordinary skill in the art will recognize that various changes and modifications of the various examples described herein can be made without departing from the scope of the present disclosure. In addition, descriptions of well-known functions and constructions may be omitted for clarity and conciseness.

It should be apparent to those skilled in the art that the following description of various examples of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

According to various examples of the present disclosure, an electronic device is a portable electronic device, and may be a video phone, a mobile phone, a smart phone, an International Mobile Telecommunication 2000 (IMT-2000), a Wideband Code Division Multiple Access (WCDMA) terminal, a Universal Mobile Telecommunication Service (UMTS) terminal, a Personal Digital Assistant (PDA), a Portable Multimedia Player (PMP), a Digital Multimedia Broadcasting (DMB) terminal, an E-Book reader, a notebook computer, a tablet computer, a digital camera, a Global Positioning System (GPS) navigation, a wearable device (e.g., electronic clothes, electronic braces, an electronic necklace, an electronic appcessory, an electronic tattoo, or a smart watch), and the like.

According to various examples of the present disclosure, an electronic device may be any combination of the foregoing devices. In addition, it will be apparent to one having ordinary skill in the art that an electronic device according to various examples of the present disclosure is not limited to the foregoing devices.

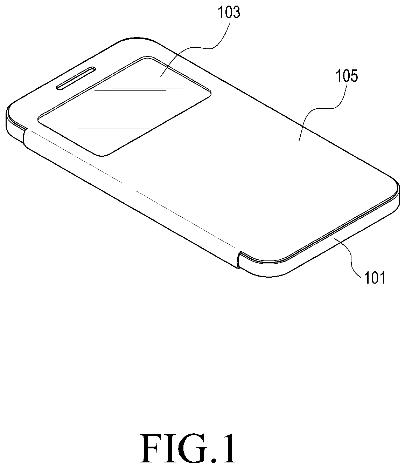

FIG. 1 illustrates an external appearance of an electronic device coupled with a cover according to an example of the present disclosure.

Referring to FIG. 1, an electronic device 101 may be coupled with a cover 105, and expose a part (hereinafter, referred to as a first area) of an entire screen to the external environment through a screen projection part 103.

According to various examples of the present disclosure, the screen projection part 103 may be made of a transparent material, may be an opening, or the like. The screen projection part 103 may be formed to correspond to a predetermined location on the front part of the electronic device 100. According to various examples of the present disclosure, the screen projection part 103 may be formed at various locations in the cover 105.

According to various examples of the present disclosure, the cover 105 may be one of a folder type, a flip type, a sliding type, and the like.

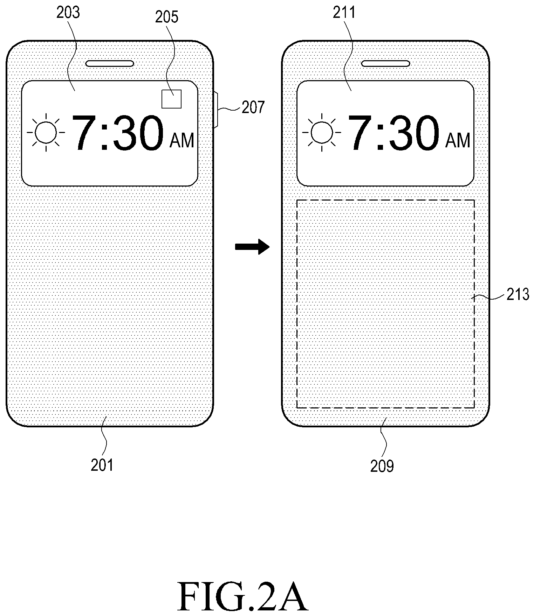

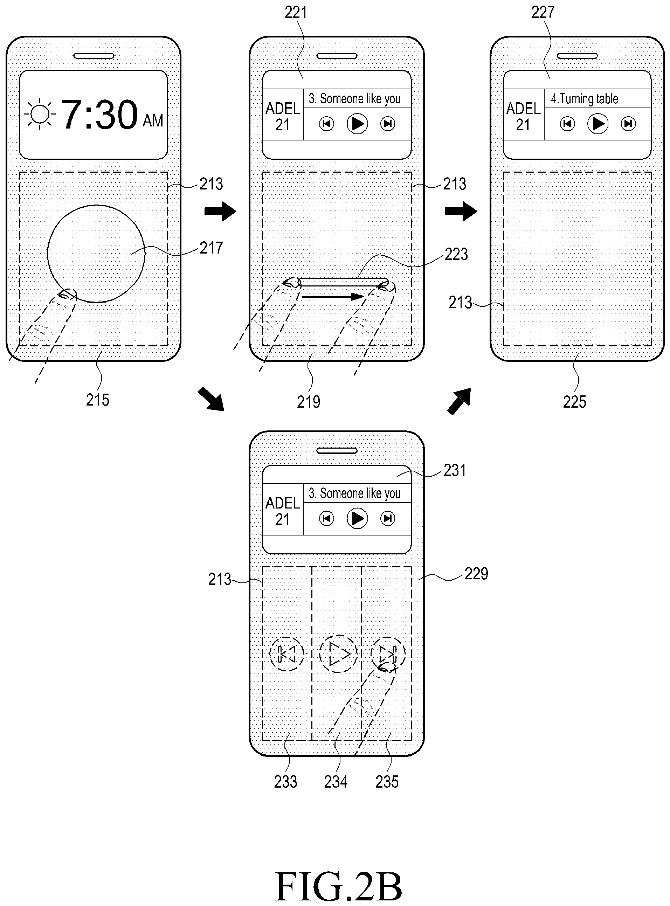

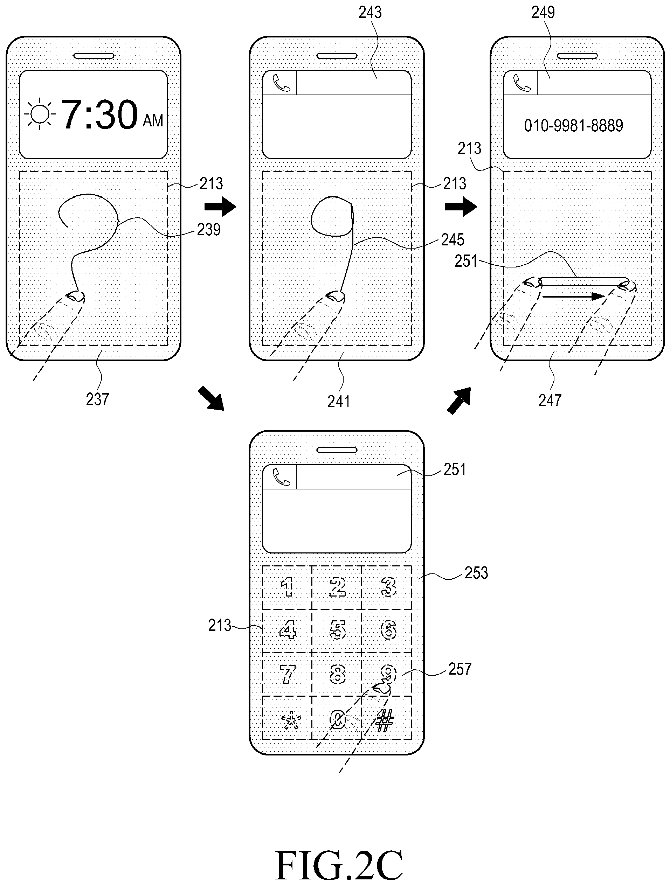

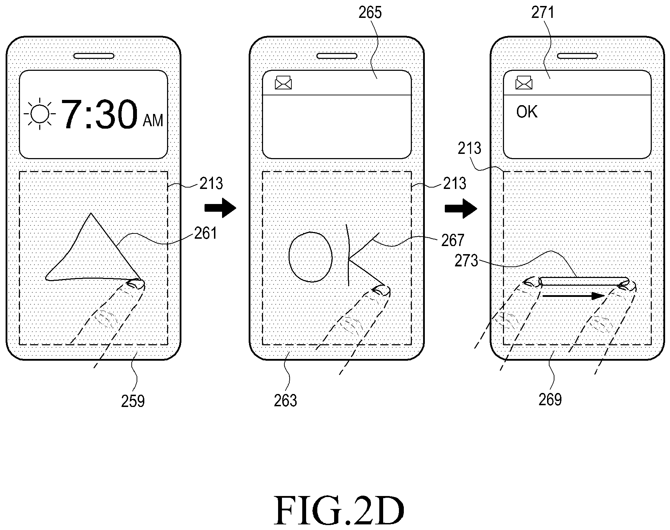

FIGS. 2A, 2B, 2C, and 2D illustrate screens on which various functions of the electronic device 101 are executed according to various examples of the present disclosure.

Referring to FIGS. 2A, 2B, 2C, and 2D, if the electronic device 101 is coupled with the cover 105, the electronic device 101 may display a home screen in a first area 203, as illustrated in a screen 201. The home screen is a screen that is displayed in the first area 203 when the electronic device 101 is in an idle state. For example, the home screen may include a weather icon representing current weather, a clock representing a current time, and/or the like.

According to various examples of the present disclosure, the electronic device 101 may display a predetermined icon 205 for requesting activation of a second area 213 in the first area 203, include a predetermined button 207 for requesting activation of the second area 213, and/or the like. Herein, the second area 213 may be a part of the entire screen of the electronic device 101, which does not overlap the first area 203.

If the predetermined icon 205 or the predetermined button 207 is selected by a user, the electronic device 101 may activate the second area 213, together with the first area 211 including the home screen, using a hovering function.

After the second area 213 is activated, the electronic device 101 may recognize a predetermined gesture input through the second area 213. If the predetermined gesture matches a predetermined word or a predetermined shape, the electronic device 101 may execute an application corresponding to the predetermined word or the predetermined shape.

For example, as illustrated in a screen 215 of FIG. 2B, if a "○" shape 217 or a word "music" is input to the second area 213 through a predetermined gesture, the electronic device 101 may execute a music player, and may display a play screen of the music player in a first area 221, as illustrated in a screen 219.

As another example, as illustrated in a screen 237 of FIG. 2C, if a "?" shape 239 or a word "call" is input to the second area 213 through a predetermined gesture, the electronic device 101 may execute a phone book, and display a screen for receiving a phone number in a first area 243, as illustrated in a screen 241.

As another example, as illustrated in a screen 259 of FIG. 2D, if a "Δ" shape 261 or a word "text" is input to the second area 213 through a predetermined gesture, the electronic device 101 may execute a messenger, and display a screen for receiving characters in a first area 265, as illustrated in a screen 263.

Alternatively, after the second area 213 is activated, the electronic device 101 may recognize a predetermined gesture input through the second area 213, and if the predetermined gesture matches a predetermined word or a predetermined shape, the electronic device 101 may execute an application corresponding to the predetermined word or the predetermined shape, then divide the second area 213 into a plurality of areas, and map a plurality of functions of the application being executed to the divided areas, respectively.

For example, as illustrated in the screen 215 of FIG. 2B, if an "○" shape 217 or a word "music" is input to the second area 213, the electronic device 101 may execute a music player, and display a play screen of the music player in a first area 231, as illustrated in the screen 229. Thereafter, the electronic device 101 may divide the second area 213 into three areas 233, 234, and 235, and respectively map a play function to the divided area 233, a go-to-next song function to the divided area 234, and a back function of the music player to the divided area 235.

As another example, as illustrated in the screen 237 of FIG. 2C, if a "?" shape 239 or a word "call" is input to the second area 213 through a predetermined gesture, the electronic device 101 may execute a phone book, and display a screen for receiving a phone number in the first area 243, as illustrated in the screen 241. Thereafter, the electronic device 101 may divide the second area 213 into twelve areas 257, and respectively map a plurality of numerals and a plurality of special characters for inputting a phone number to the divided areas 257. For example, the electronic device 1010 may divide the second area 213 into areas 257 to correspond to a dial pad.

According to various examples of the present disclosure, the electronic device 101 may recognize a predetermined gesture input to the second area 213 by the user, and execute a function corresponding to the predetermined gesture among the plurality of functions of the application being executed.

For example, as illustrated in the screen 219 of FIG. 2B, if a "-"-shaped gesture 223 of dragging from the left to the right is input while a specific song is played through a music player, the electronic device 101 may execute a go-to-next song function corresponding to the "-"-shaped gesture 223, may play a song following the specific song, and may display a play screen of the following song in the first area 227, as illustrated in the screen 225.

As another example, as illustrated in the screen 229 of FIG. 2B, if the area 235 of the three areas 233, 234, and 235 is touched while a specific song is played through the music player, the electronic device 101 may execute a go-to-next song function corresponding to the area 235, play a song following the specific song, and display a play screen of the following song in the first area 227, as illustrated in the screen 229.

As another example, as illustrated in the screen 241 of FIG. 2C, if a gesture 245 of writing a numeral is input through the second area 213 while a phone book is executed, the electronic device 101 may display the numeral corresponding to the gesture 245 in the first area 249, as illustrated in a screen 247. Thereafter, if a "-"-shaped gesture 251 of dragging from the left to the right is input, the electronic device 101 may set up a call based on numerals displayed in the first area 249. As another example, if an area of the twelve areas 257 is touched, as illustrated in a screen 253 of FIG. 2C, the electronic device 101 may display a numeral mapped to the touched area in the first area 249, as illustrated in the screen 247. Thereafter, if a "-"-shaped gesture 251 of dragging from the left to the right is input, the electronic device 101 may set up a call based on the numerals displayed in the first area 249. As another example, if an area of the twelve areas 257 is touched, a corresponding numeral and/or image may be displayed in display area 251 contemporaneously with the area being touched.

As another example, as illustrated in a screen 263 of FIG. 2D, if a gesture 267 of writing a word "OK" is input through the second area 213 while a messenger is executed, the electronic device 101 may display the word "OK" corresponding to the gesture 267 in a first area 271, as illustrated in a screen 269. Thereafter, if a "-"-shaped gesture 273 of dragging from the left to the right is input, the electronic device 101 may generate and send a message including at least one character displayed in the first area 271.

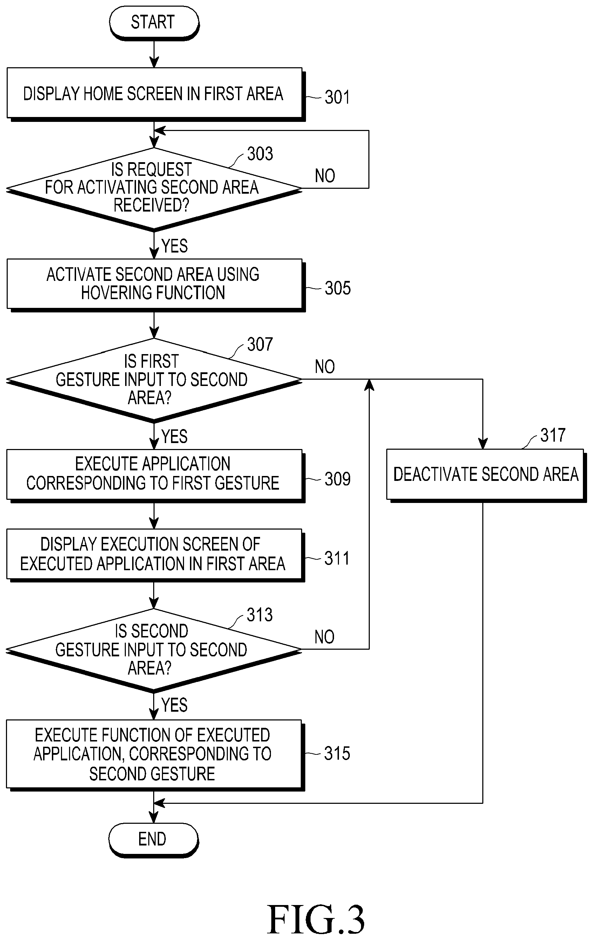

FIG. 3 is a flowchart illustrating a method of executing a function of an electronic device according to a first example of the present disclosure.

Referring to FIG. 3, at operation 301, an electronic device 101 (e.g., as illustrated in FIG. 1) may display a home screen in a first area. Thereafter, the electronic device 101 may proceed to operation 303. According to various examples of the present disclosure, the first area may be a part of an entire screen of the electronic device 101, and the home screen may be a screen that is displayed in the first area when the electronic device 101 is in an idle state. For example, the home screen may include a weather icon representing current weather, a clock representing a current time, and/or the like.

At operation 303, the electronic device 101 may determine whether a request for activating a second area is received. According to various examples of the present disclosure, the second area may be a part of the entire area of the electronic device 101, which does not overlap the first area.

For example, if a specific button of the electronic device 101 or a specific icon displayed in the first area is selected by a user, the electronic device 101 may determine that a request for activating the second area has been received. According to various examples of the present disclosure, the specific button may be a button for requesting activation of the second area, and the specific icon may be an icon for requesting activation of the second area. As another example, if predetermined data is received from the outside, the electronic device 101 may determine that a request for activating the second area has been received. The predetermined data may be a text message (e.g., a short message, a multimedia message, or a call signal), E-mail, and/or the like.

If a request for activating the second area is received, the electronic device 101 may proceed to operation 305, and otherwise, the electronic device 101 may continue to perform operation 303.

If the electronic device 101 determines that a request for activating a second area is not received at operation 303, then the electronic device 101 may return to operation 303 at which the electronic device 101 continues to poll for an indication of receipt of a request for activating the second area.

In contrast, if the electronic device 101 determines that a request for activating a second area is received at operation 303, then the electronic device 101 may proceed to operation 305 at which the electronic device 101 may activate the second area using the hovering function. Thereafter, the electronic device 101 may proceed to operation 307. According to various examples of the present disclosure, activating the second area may correspond to enhancing touch sensitivity of the second area using the hovering function. For example, as illustrated in the screen 201 of FIG. 2A, if the predetermined icon 205 or the predetermined button 207 is selected by a user, the electronic device 101 may activate the second area 213, as illustrated in the screen 209.

At operation 307, the electronic device 101 may determine whether a first gesture is input to the second area. For example, the electronic device 101 may determine whether a first gesture is input to the second area by the user within a predetermined time period. According to various examples of the present disclosure, the first gesture may be input through the cover 105 (e.g., as illustrated in FIG. 1) of the electronic device 101. The first gesture may be a gesture for executing a predetermined application among various applications that are provided by the electronic device 101. The first gesture may vary depending on a kind of an application, and may be stored in a memory unit of the electronic device 101.

For example, the electronic device 101 may store a table representing a correlation between applications and gestures, as shown in Table 1 below.

**Table 1**

| **Name of Application** | **Shape of Gesture** |
|---|---|
| Music Player | ○ |
| Phone Book | ? |
| Messenger | Δ |

If a gesture is input to the second area, the electronic device 101 may determine whether a first gesture has been input to the second area with reference to Table 1. If a shape corresponding to the input gesture is found in Table 1, the electronic device 101 may determine that a first gesture has been input to the second area. However, if the shape corresponding to the input gesture is not found in Table 1, the electronic device 101 may determine that no first gesture has been input to the second area.

According to various examples of the present disclosure, if no gesture has been input to the second area within the predetermined time period, the electronic device 101 may determine that no first gesture has been input to the second area.

If the electronic device 101 determines that a first gesture has been input, then the electronic device 101 may proceed to operation 309, and otherwise, the electronic device 101 may proceed to operation 317.

If the electronic device 101 determines that a first gesture has been input to the second area at operation 307, then the electronic device 101 may proceed to operation 309 at which the electronic device 101 may execute an application corresponding to the first gesture among a plurality of applications executable in the electronic device 101. Thereafter, the electronic device 101 may proceed to operation 311.

At operation 311, the electronic device 101 may display an execution screen of the executed application in the first area. Thereafter, the electronic device 101 may proceed to operation 313. For example, as illustrated in the screen 215 of FIG. 2B, if a first gesture of a "○" shape is input, the electronic device 101 may execute a music player corresponding to the first gesture, and display a play screen of the music player in the first screen 221, as illustrated in the screen 219.

At operation 313, the electronic device 101 may determine whether a second gesture is input to the second area. For example, the electronic device 101 may determine whether a second gesture is input to the second area by the user within a predetermined time period. The second gesture may be input through the cover 105 of the electronic device 101. The second gesture is a gesture for executing a predetermined one of a plurality of functions that are provided by the application being executed by the electronic device 101. The second gesture may vary depending on a kind of a function, and may be stored in the memory unit of the electronic device 101.

For example, the electronic device 101 may store a table representing a correlation between functions and gestures, as shown in Table 2 below.

**Table 2**

| **Name of Application** | **Function** | **Shape of Gesture** |
|---|---|---|
| Music Player | Back | - (Drag from Right to Left) |
| | Go-to-Next Song | - (Drag from Left to Right) |

Thereafter, if a gesture is input to the second area, the electronic device 101 may determine whether a second gesture has been input to the second area with reference to Table 2. If a shape corresponding to the input gesture is found in Table 2, the electronic device 101 may determine that a second gesture has been input to the second area. However, if the shape corresponding to the input gesture is not found in Table 2, the electronic device 101 may determine that no second gesture has been input to the second area.

According to various examples of the present disclosure, if no gesture has been input to the second area within the predetermined time period, the electronic device 101 may determine that no second gesture has been input to the second area.

If the electronic device 101 determines that the second gesture has been input, then the electronic device 101 may proceed to operation 315, and otherwise, the electronic device 101 may proceed to operation 317.

If the electronic device 101 determines that the second gesture has been input at operation 313, then the electronic device 101 may proceed to operation 315 at which the electronic device 101 may execute a function corresponding to the second gesture among the plurality of functions that are provided by the application being executed. For example, as illustrated in the screen 219 of FIG. 2B, if a "-"-shaped second gesture of dragging from the left to the right is input while a certain music file (e.g., "3. Someone like you") is played, the electronic device 101 may play a music file (e.g., "4. Tuning table") following the music file, and may display a play screen of the following music file in the first area 227, as illustrated in the screen 225.

At operation 317, the electronic device 101 may stop the hovering function with respect to the second area, thereby deactivating the second area. According to various examples of the present disclosure, deactivating the second area may correspond to lowering touch sensitivity of the second area to touch sensitivity of before the second area is activated.

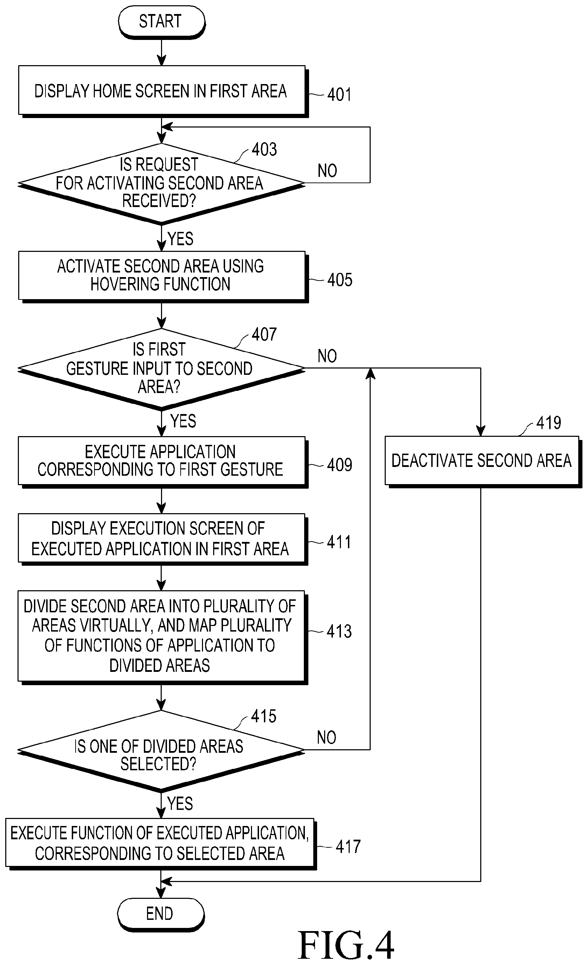

FIG. 4 is a flowchart illustrating a method of executing a function of an electronic device according to a second example of the present disclosure.

Referring to FIG. 4, at operation 401, an electronic device 101 (e.g., as illustrated in FIG. 1) may display a home screen in a first area. Thereafter, the electronic device may proceed to operation 403. According to various examples of the present disclosure, the first area may be a part of an entire screen of the electronic device 101, and the home screen may be a screen that is displayed in the first area when the electronic device 101 is in an idle state. For example, the home screen may include a weather icon representing current weather, a clock representing a current time, and/or the like.

At operation 403, the electronic device 101 may determine whether a request for activating the second area is received. According to various examples of the present disclosure, the second area may be a part of an entire screen of the electronic device 101, which does not overlap the first area.

For example, if a predetermined button of the electronic device 101 or a predetermined icon displayed in the first area is selected by a user, the electronic device 101 may determine that a request for activating the second area has been received. According to various examples of the present disclosure, the predetermined button may be a button for requesting activation of the second area, and the predetermined icon may be an icon for requesting activation of the second area. As another example, if predetermined data is received from the outside, the electronic device 101 may determine that a request for activating the second area has been received. The predetermined data may be a text message (e.g., a short message, a multimedia message, or a call signal), E-mail, and/or the like.

If the electronic device 101 determines that a request for activating the second area has been received, the electronic device 101 may proceed to operation 405, and otherwise, the electronic device 101 may continue to perform operation 403.

If the electronic device 101 determines that a request for activating a second area is not received at operation 403, then the electronic device 101 may return to operation 403 at which the electronic device 101 continues to poll for an indication of receipt of a request for activating the second area.

In contrast, if the electronic device 101 determines that a request for activating the second area has been received at operation 403, then the electronic device 101 may proceed to operation 405 at which the electronic device 101 may activate the second area using the hovering function. Thereafter, the electronic device 101 may proceed to operation 407. According to various examples of the present disclosure, the activating the second area may correspond to enhancing touch sensitivity of the second area using the hovering function. For example, as illustrated in the screen 201 of FIG. 2A, if the predetermined icon 205 or the predetermined button 207 is selected by a user, the electronic device 101 may activate the second area 213, as illustrated in the screen 209.

At operation 407, the electronic device 101 may determine whether a first gesture has been input to the second area. For example, the electronic device 101 may determine whether a first gesture has been input to the second area by the user within a predetermined time period. According to various embodiments of the present disclosure, the first gesture may be input through the cover 105 of the electronic device 101. The first gesture may be a gesture for executing a predetermined one of various applications that are provided by the electronic device 101. The first gesture may vary depending on a kind of an application, and may be stored in the memory unit of the electronic device 101.

For example, the electronic device 101 may store a table representing a correlation between applications and gestures, as shown in Table 1. If a gesture has been input to the second area, the electronic device 101 may determine whether a first gesture has been input to the second area with reference to Table 1. If a shape corresponding to the input gesture is found in Table 1, the electronic device 101 may determine that a first gesture has been input to the second area. However, if the shape corresponding to the input gesture is not found in Table 1, the electronic device 101 may determine that no first gesture has been input to the second area.

According to various examples of the present disclosure, if no gesture has been input to the second area within the predetermined time period, the electronic device 101 may determine that no first gesture has been input to the second area.

If the electronic device 101 determines that a first gesture has been input, then the electronic device 101 may proceed to operation 409, and otherwise, the electronic device 101 may proceed to operation 417.

If the electronic device 101 determines that a first gesture has been input to the second area at operation 407, then the electronic device 101 may proceed to operation 409 at which the electronic device 101 may execute an application corresponding to the first gesture among the plurality of applications executable in the electronic device 101. Thereafter, the electronic device 101 may proceed to operation 411.

At operation 411, the electronic device 101 may display an execution screen of the application executed in the first area. Thereafter, the electronic device 101 proceeds to operation 413.

At operation 413, the electronic device 101 may divide (e.g., virtually divide) the second area into a plurality of areas, respectively map the plurality of functions of the application being executed to the divided areas, and then proceed to operation 415.

For example, as illustrated in the screen 215 of FIG. 2B, if a first gesture of a gesture shape "○" is input, the electronic device 101 may execute a music player corresponding to the first gesture. Thereafter, the electronic device 101 may display a play screen of the music player in the first area 221, as illustrated in the screen 219, divide the second area 213 into three areas 233, 234, and 235, and respectively map a play function to the divided area 233, a go-to-next song function to the divided area 234, and a back function of the music player to the divided area 235.

At operation 415, the electronic device 101 may determine whether any one of the divided areas 233, 234, and 235 is selected. For example, the electronic device 101 may determine whether any one of the divided areas 233, 234, and 235 is selected by a user within a predetermined time period.

If one of the divided areas 233, 234, and 235 is selected, the electronic device 101 may proceed to operation 417, and otherwise, the electronic device 101 may proceed to operation 419.

If the electronic device determines that any one of the divided areas 233, 234, and 235 is selected at operation 415, then the electronic device 101 may proceed to operation 417 at which the electronic device 101 may execute a function corresponding to the selected area among the plurality of functions that are provided by the application being executed. For example, as illustrated in the screen 229 of FIG. 2B, if the area 235 to which the go-to-next song function is mapped among the three areas 233, 234, and 235 is selected while a certain music file (e.g., "3. Someone like you") is played, the electronic device 101 may play a music file (e.g., "4. Turning table") following the music file, and may display a play screen of the following music file in the first area 227, as illustrated in the screen 225.

At operation 419, the electronic device 101 may stop the hovering function with respect to the second area, thereby deactivating the second area. According to various examples of the present disclosure, deactivating the second area may correspond to lowering touch sensitivity of the second area to touch sensitivity of before the second area is activated.

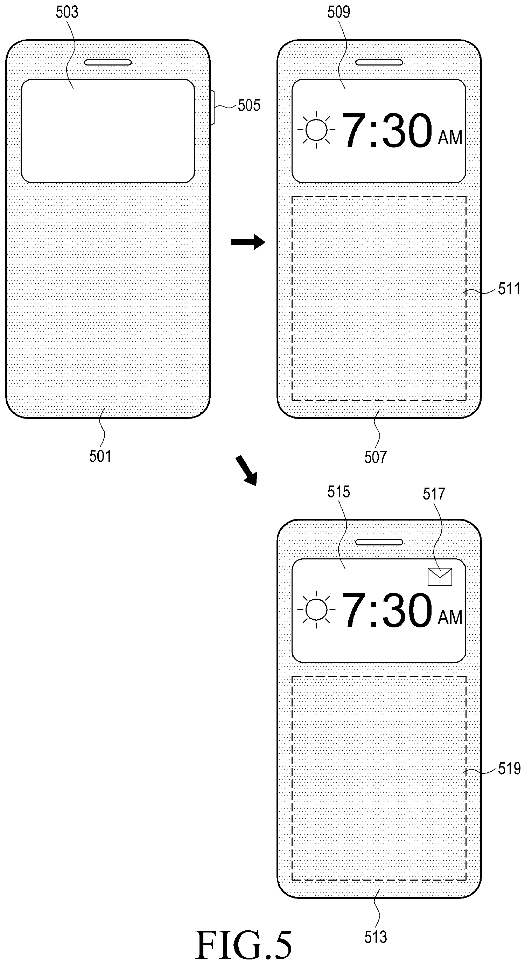

FIG. 5 illustrates screens on which a function of an electronic device is executed according to an example of the present disclosure.

Referring to FIG. 5, if an electronic device 101 is coupled with a cover 105 (e.g., as illustrated in FIG. 1), as illustrated in a screen 501, the electronic device 101 may display a sleep screen in a first area 503. The sleep screen may be a screen that is displayed in the first area 503 when the electronic device 101 is in a sleep state. For example, the sleep screen may be a screen on which no image is displayed.

Thereafter, if a predetermined button 505 is pressed in the screen 501, then, as illustrated in screen 507, the electronic device 101 may display a home screen in a first area 509, and activate both the first area 509 and a second area 511 using the hovering function. According to various examples of the present disclosure, the predetermined button 505 may be a button for requesting activation of both the first area 509 and the second area 511. The home screen may be a screen that is displayed in the first area 509 when the electronic device 101 is in an idle state. For example, the home screen may include a weather icon representing current weather, a clock representing a current time, and/or the like.

If a message is received in the screen 501, then, as illustrated in screen 513, the electronic device 101 may display a notify icon 517 notifying that a message has been received, on the home screen, and activate the first area 515 and the second area 519 using the hovering function.

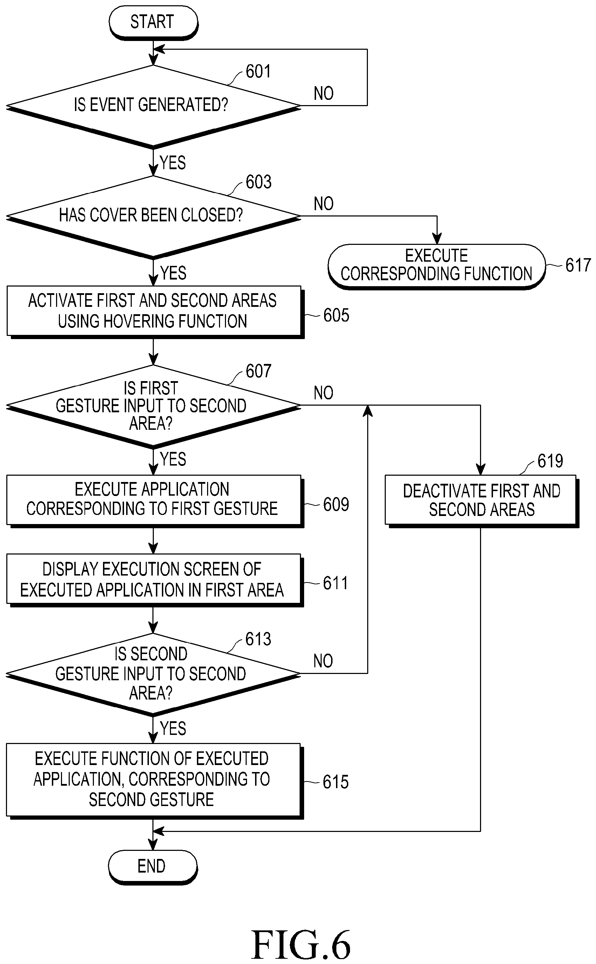

FIG. 6 is a flowchart illustrating a method of executing a function of an electronic device according to a third example of the present disclosure.

Referring to FIG. 6, at operation 601, an electronic device 101 (e.g., as illustrated in FIG. 1) may determine whether an event is generated. According to various examples of the present disclosure, the event may include an internal event and an external event. The external event may be an event that is generated by an external device or a user, for example, a case in which a predetermined button is pressed by a user, or a case in which predetermined data is received from an external device. The internal event may be an event that is generated in the electronic device 101, and may be an alarm event of a clock, a schedule notify event of a calendar, and/or the like. The predetermined button may be a button for requesting activation of a first area and a second area, and the predetermined data may be a text message (e.g., a short message, a multimedia message, or a call signal), E-mail, and/or the like.

If the electronic device 101 determines that an event has been generated, the electronic device 101 may proceed to operation 603, and otherwise, the electronic device 101 may continue to perform operation 601.

If the electronic device 101 determines that an event has not been generated at operation 601, then the electronic device 101 may return to operation 601 at which the electronic device 101 continues to poll for an indication of generation of an event.

In contrast, if the electronic device 101 determines that an event has been generated at operation 601, then the electronic device 101 may proceed to operation 603 at which the electronic device 101 may determine whether the cover 105 (e.g., as illustrated in FIG. 1) has been closed.

If the electronic device 101 determines that the cover 105 has been closed at operation 603, then the electronic device 101 may proceed to operation 605, and otherwise, the electronic device 101 may proceed to operation 617. According to various examples of the present disclosure, the electronic device 101 may determine a closed or opened state of the cover 105 by detecting a magnetic force of a magnet attached on the cover 105.

If the electronic device 101 determines that the cover 105 has not been closed at operation 603, then the electronic device may proceed to operation 617 at which the electronic device 101 may perform a function corresponding to the generated event. For example, if the generated event is an event of receiving a text message, the electronic device 101 may display a part of content of the received text message in a part of an entire screen, and/or the like.

In contrast, if the electronic device 101 determines that the cover 105 has been closed at operation 603, then the electronic device may proceed to operation 605 at which the electronic device 101 may activate both the first area and the second area using the hovering function. Thereafter, the electronic device 101 may proceed to operation 607. According to various examples of the present disclosure, the first area may be a part of an entire screen of the electronic device 101. For example, as illustrated in the screen 501 of FIG. 5, if the predetermined button 505 is pressed by a user in the screen 501, the electronic device 101 may activate the first area 509 and the second area 511, as illustrated in the screen 507.

At operation 607, the electronic device 101 may determine whether a first gesture is input to the second area. For example, the electronic device 101 may determine whether a first gesture is input to the second area by a user within a predetermined time period. According to various examples of the present disclosure, the first gesture may be input through the cover 105 of the electronic device 101. The first gesture may be a gesture for executing a predetermined one of various applications that are provided by the electronic device 101. The first gesture may vary depending on a kind of an application, and may be stored in the memory unit of the electronic device 101.

For example, the electronic device 101 may store a table representing a correlation between applications and gestures, as shown in Table 1. If the electronic device 101 determines that a gesture has been input to the second area, the electronic device 101 may determine whether a first gesture has been input to the second area with reference to Table 1. If a shape corresponding to the input gesture is found in Table 1, the electronic device 101 may determine that a first gesture has been input to the second area. However, if the shape corresponding to the input gesture is not found in Table 1, the electronic device 101 may determine that no first gesture has been input to the second area.

According to various examples of the present disclosure, if no gesture has been input to the second area within the predetermined time period, the electronic device 101 may determine that no first gesture has been input to the second area.

If the electronic device 101 determines that a first gesture has been input, then the electronic device 101 may proceed to operation 609, and otherwise, the electronic device 101 may proceed to operation 619.

If the electronic device 101 determines that a first gesture is input to the second area at operation 607, then the electronic device 101 may proceed to operation 609 at which the electronic device 101 may execute an application corresponding to the first gesture among a plurality of applications executable in the electronic device 101. Thereafter, the electronic device 101 may proceed to operation 611.

At operation 611, the electronic device 101 may display an execution screen of the executed application in the first area. Thereafter, the electronic device 101 may proceed to operation 613. For example, as illustrated in the screen 215 of FIG. 2B, if a first gesture of a "○" shape has been input, the electronic device 101 may execute a music player corresponding to the first gesture, and display a play screen of the music player in the first screen 221, as illustrated in the screen 219.

At operation 613, the electronic device 101 may determine whether a second gesture is input to the second area. For example, the electronic device 101 may determine whether a second gesture is input to the second area by the user within a predetermined time period. According to various examples of the present disclosure, the second gesture may be input through the cover 105 of the electronic device 101. The second gesture may be a gesture for executing a predetermined one of the plurality of functions that are provided by the application being executed in the electronic device 101. The second gesture may vary depending on a kind of a function, and may be stored in the memory unit of the electronic device 101.

For example, the electronic device 101 may store a table representing a correlation between functions and gestures, as shown in Table 2. If a gesture has been input to the second area, the electronic device 101 may determine whether a second gesture has been input to the second area with reference to Table 2. If a shape corresponding to the input gesture is found in Table 2, the electronic device 101 may determine that a second gesture has been input to the second area. However, if the shape corresponding to the input gesture is not found in Table 2, the electronic device 101 may determine that no second gesture has been input to the second area.

According to various examples of the present disclosure, if no gesture has been input to the second area within the predetermined time period, the electronic device 101 may determine that no second gesture has been input to the second area.

If the electronic device 101 determines that a second gesture has been input at operation 613, then the electronic device 101 may proceed to operation 615, and otherwise, the electronic device 101 may proceed to operation 619.

If the electronic device 101 determines that a second gesture is input to the second area at operation 613, then the electronic device 101 may proceed to operation 615 at which the electronic device 101 may execute a function corresponding to the second gesture among the plurality of functions that are provided by the application being executed. For example, as illustrated in the screen 219 of FIG. 2B, if a "-"-shaped second gesture of dragging from the left to the right is input while a certain music file (e.g., "3. Someone like you") is played, the electronic device 101 may play a music file (e.g., "4. Tuning table") following the music file, and may display a play screen of the following music file in the first area 227, as illustrated in the screen 225.

In contrast, if the electronic device 101 determines that a second gesture is not input to the second area at operation 613, then the electronic device 101 may proceed to operation 619.

At operation 619, the electronic device 101 may stop the hovering function with respect to the first and second areas, thereby deactivating the first and second areas. According to various examples of the present disclosure, deactivating the first and second areas may correspond to lowering touch sensitivity of the first and second areas to touch sensitivity of before the first and second areas are activated.

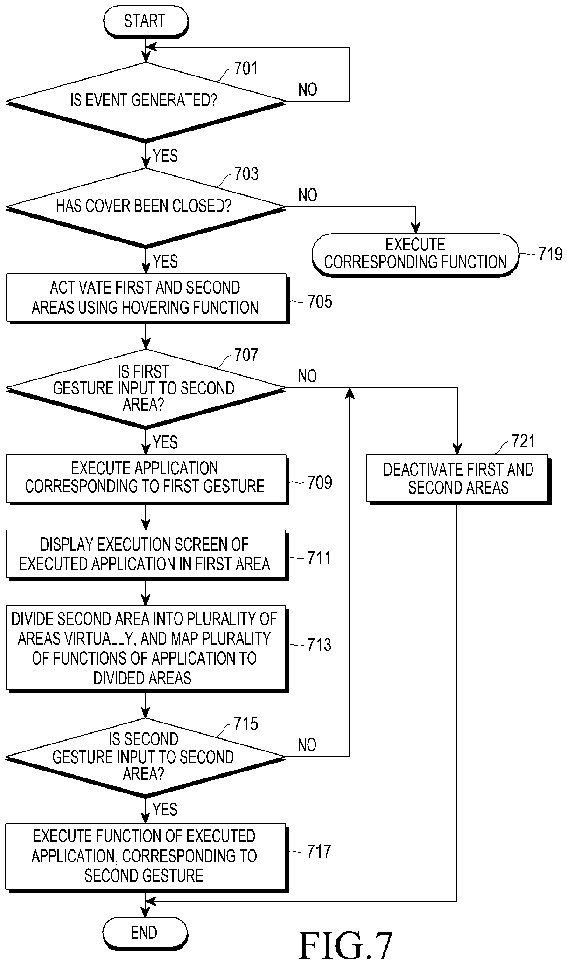

FIG. 7 is a flowchart illustrating a method of executing a function of an electronic device according to a fourth example of the present disclosure.

Referring to FIG. 7, at operation 701, an electronic device 101 (e.g., as illustrated in FIG. 1) may determine whether an event is generated. According to various examples of the present disclosure, the event may include an internal event and an external event. The external event may be an event that is generated by an external device or a user, for example, a case in which a predetermine button is pressed by a user, or a case in which predetermined data is received from an external device. The internal event may be an event that is generated in the electronic device 101, and may be an alarm event of a clock, a schedule notify event of a calendar, and/or the like. The predetermined button may be a button for requesting activation of a first area and a second area, and the predetermined data may be a text message (e.g., a short message, a multimedia message, or a call signal), E-mail, and/or the like.

If the electronic device 101 determines that an event has been generated, the electronic device 101 may proceed to operation 703, and otherwise, the electronic device 101 may continue to perform operation 701.

If the electronic device 101 determines that an event has not been generated at operation 701, then the electronic device 101 may return to operation 701 at which the electronic device 101 continues to poll for an indication of generation of an event.

In contrast, if the electronic device 101 determines that an event has been generated at operation 701, then the electronic device 101 may proceed to operation 703 at which the electronic device 101 may determine whether the cover 105 (e.g., as illustrated in FIG. 1) has been closed.

If the electronic device 101 determines that the cover 105 has been closed at operation 703, then the electronic device 101 may proceed to operation 705, and otherwise, the electronic device 101 may proceed to operation 719. According to various examples of the present disclosure, the electronic device 101 may determine a closed or opened state of the cover 105 by sensing a magnetic force of a magnet attached on the cover 105.

If the electronic device 101 determines that the cover 105 has not been closed at operation 703, then the electronic device may proceed to operation 719 at which the electronic device 101 may perform a function corresponding to the generated event. For example, if the generated event is an event of receiving a text message, the electronic device 101 may display a part of content of the received text message in a part of an entire screen, and/or the like.

In contrast, if the electronic device 101 determines that the cover 105 has been closed at operation 703, then the electronic device may proceed to operation 705 at which the electronic device 101 may activate both the first area and the second area using the hovering function. Thereafter, the electronic device 101 may proceed to operation 707. The first area may be a part of the entire screen of the electronic device 101. For example, as illustrated in the screen 501 of FIG. 5, if the predetermined button 505 is pressed by a user, the electronic device 101 may activate the first area 509 and the second area 511, as illustrated in the screen 507.

At operation 707, the electronic device 101 may determine whether a first gesture is input to the second area. For example, the electronic device 101 may determine whether a first gesture is input to the second area by a user within a predetermined time period. According to various examples of the present disclosure, the first gesture may be input through the cover 105 of the electronic device 101. The first gesture may be a gesture for executing a predetermined one of various applications that are provided by the electronic device 101. The first gesture may vary depending on a kind of an application, and may be stored in the memory unit of the electronic device.

For example, the electronic device 101 may store a table representing a correlation between applications and gestures, as shown in Table 1. If the electronic device 101 determines that a gesture has been input to the second area, the electronic device 101 may determine whether a first gesture has been input to the second area with reference to Table 1. If a shape corresponding to the input gesture is found in Table 1, the electronic device 101 may determine that a first gesture has been input to the second area. However, if the shape corresponding to the input gesture is not found in Table 1, the electronic device 101 may determine that no first gesture has been input to the second area.

According to various examples of the present disclosure, if no gesture has been input to the second area within the predetermined time period, the electronic device 101 may determine that no first gesture has been input to the second area.

If the electronic device 101 determines that a first gesture has been input, then the electronic device 101 may proceed to operation 709, and otherwise, the electronic device 101 may proceed to operation 721.

If the electronic device 101 determines that a first gesture is input to the second area at operation 707, then the electronic device 101 may proceed to operation 709 at which the electronic device 101 may execute an application corresponding to the first gesture among the plurality of applications that are executable in the electronic device 101. Thereafter, the electronic device 101 may proceed to operation 711.

At operation 711, the electronic device 101 may display an execution screen of the executed application in the first area. Thereafter, the electronic device 101 may proceed to operation 713.

At operation 713, the electronic device 101 may divide (e.g., virtually divide) the second area into a plurality of areas, respectively map the plurality of functions of the application to the divided areas. Thereafter, the electronic device 101 may proceed to operation 715.

For example, as illustrated in the screen 215 of FIG. 2B, if a first gesture of a "○" shape has been input, the electronic device 101 may execute a music player corresponding to the first gesture. Thereafter, the electronic device 101 may display a play screen of the music player in the first area 221, divide the second area 213 (e.g., as illustrated in FIG. 2A) into the three areas 233, 234, and 235, and respectively map a play function to the divided area 233, a go-to-next song function to the divided area 234, and a back function of the music player to the divided area 235, as illustrated in the screen 229.

At operation 715, the electronic device 101 may determine whether any one of the divided areas is selected. For example, the electronic device 101 may determine whether any one of the divided areas is selected by a user within a predetermined time period.

If one of the divided areas is selected by a user, then the electronic device 101 may proceed to operation 717, and otherwise, the electronic device 101 may proceed to operation 721.

If the electronic device 101 determines that any one of the divided areas is selected at operation 715, then the electronic device 101 may proceed to operation 717 at which the electronic device 101 may execute a function corresponding to the selected area among the plurality of functions that are provided by the application being executed. For example, as illustrated in the screen 229 of FIG. 2B, if the area 235 to which the go-to-next song function is mapped among the three areas 233, 234, and 235 is selected while a certain music file (e.g., "3. Someone like you") is played, the electronic device 101 may play a music file (e.g., "4. Turning table") following the music file, and may display a play screen of the following music file in the first area 227, as illustrated in the screen 225.

In contrast, if the electronic device 101 determines that a second gesture is not input to the second area at operation 715, then the electronic device 101 may proceed to operation 721.

At operation 721, the electronic device 101 may stop the hovering function with respect to the first and second areas, thereby deactivating the first and second areas. According to various examples of the present disclosure, deactivating the first and second areas may correspond to lowering touch sensitivity of the first and second areas to touch sensitivity of before the first and second areas are activated.

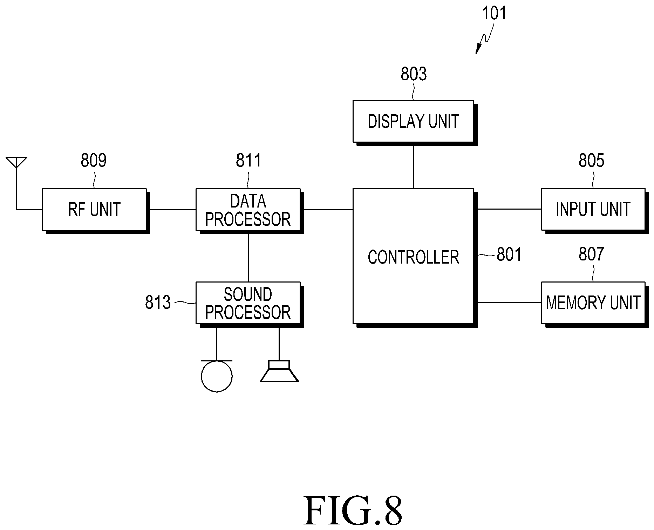

FIG. 8 is a block diagram of an electronic device according to an example of the present disclosure.

Referring to FIG. 8, an electronic device 101 may include a controller 801, a display unit 803, an input unit 805, a memory unit 807, an Radio Frequency (RF) unit 809, a data processor 811, and a sound processor 813. The electronic device 101 may be coupled/decoupled with/from a cover 105 (e.g., as illustrated in FIG. 1).

The RF unit 809 may perform a wireless communication function of the electronic device 101. More specifically, the RF unit 809 may include an RF transmitter to up-convert a frequency of a signal to be transmitted and amplify the signal, and an RF receiver to low-noise amplify a received signal and down-convert a frequency of the signal. The data processor may include a transmitter to encode and modulate a signal to be transmitted, and a receiver to demodulate and decode a received signal. The data processor 811 may include a modem and a codec, and the codec may include a data codec to process packet data, and an audio codec to process audio signals such as voice.

The sound processor 813 may reproduce received audio signals output from the data processor 811 through a speaker, or transfer audio signals to the transmitted, generated by a microphone, to the data processor 811.

The input unit 805 may include keys for inputting numeric and character information and function keys for setting various functions.

The display unit 803 may display image signals as a screen, and display data output from the controller 801. If the display unit 803 is implemented as a capacitive or resistive touch screen, the input unit 805 may include a minimum number of predetermined keys, and the display unit 803 may at least partially replace the key input function of the input unit 805.

The memory unit 807 may include a program memory and a data memory (not shown). The program memory may store a booting and Operating System (OS) for controlling the general operations of the electronic device 101, and the data memory may store various kinds of data created or received when the electronic device 101 operates. For example, the memory unit 807 may store a correlation between first gestures and applications, and a correlation between second gestures and functions of a predetermined application.

Each first gesture may be a gesture for executing a predetermined one of various applications that are provided by the electronic device 101. The first gesture may vary depending on a kind of an application. Each second gesture may be a gesture for executing a predetermined one of a plurality of functions that are provided by an application being executed in the electronic device 101. The second gesture may vary depending on a kind of an application, or a function of a predetermined application. For example, the memory unit 807 may create a table representing a correlation between first gestures and applications, as shown in Table 1, and store the table. As another example, the memory unit 807 may create a table representing a correlation between second gestures and functions of a predetermined application, as shown in Table 2, and store the table.

The controller 801 may control overall operations of the electronic device 101. For example, the controller 801 may recognize a gesture input by a user through a second area, and execute an application (or a function of an application) corresponding to the recognized gesture.

More specifically, according to the first example of the present disclosure, the controller 801 may display a home screen in a first area. According to various examples of the present disclosure, the first area may be a part of an entire screen of the controller 801, and the home screen may be a screen that is displayed in the first area when the controller 801 is in an idle state. For example, the home screen may include a weather icon representing current weather, a clock representing a current time, and/or the like.

According to various examples of the present disclosure, the controller 801 may determine whether a request for activating the second area is received. The second area 213 may be a part of the entire screen of the electronic device 101, which does not overlap the first area. For example, if a predetermined button of the electronic device 101 is pressed or a predetermined icon displayed in the first area is touched by a user, the controller 801 may determine that a request for activating the second area has been received. The predetermined button may be a button for requesting activation of the second area, and the predetermined icon may be an icon for requesting activation of the second area. As another example, if predetermined data is received from the outside, the controller 801 may determine that a request for activating the second area has been received. The predetermined data may be a text message (e.g., a short message, a multimedia message, or a call signal), E-mail, and/or the like.

If a request for activating the second area is received, the controller 801 may activate the second area using the hovering function. Activating the second area may correspond to enhancing touch sensitivity of the second area using the hovering function. For example, as illustrated in the screen 201 of FIG. 2A, if the predetermined icon 205 is touched or the predetermined button is pressed by a user, the controller 801 may activate the second area 213, as illustrated in the screen 209.

Thereafter, the controller 801 may determine whether a first gesture is input to the second area by the user within a predetermined time period. The first gesture may be input through the cover 105 coupled with the electronic device 101.

For example, if a gesture has been input through the second area, the controller 801 may determine whether a first gesture has been input to the second area with reference to Table 1 stored in the memory unit 807. If a shape corresponding to the input gesture is found in Table 1, the controller 801 may determine that a first gesture has been input to the second area. However, if the shape corresponding to the input gesture is not found in Table 1, the controller 801 may determine that no first gesture has been input to the second area.

According to various examples of the present disclosure, if no gesture has been input through the second area within the predetermined time period, the controller 801 may determine that no first gesture has been input to the second area.

If no first gesture has been input, the controller 801 may stop the hovering function with respect to the second area, thereby deactivating the second area. According to various embodiments of the present disclosure, deactivating the second area may correspond to lowering touch sensitivity of the second area to touch sensitivity of before the second area is activated.

If the controller 801 determines that a first gesture has been input, the controller 801 may execute an application corresponding to the first gesture among a plurality of application executable in the electronic device 101, and display an execution screen of the executed application in the first area. For example, as illustrated in the screen 215 of FIG. 2B, if a first gesture of a "○" shape has been input, the controller 801 may execute a music player corresponding to the first gesture, and display a play screen of the music player in the first screen 221, as illustrated in the screen 219.

Thereafter, the controller 801 may determine whether a second gesture is input to the second area by the user within a predetermined time period. The second gesture may be input through the cover 105 coupled with the electronic device 101.

For example, if a gesture has been input through the second area, the controller 801 may determine whether a second gesture has been input to the second area with reference to Table 2 representing a correlation between second gestures and functions of a predetermined application. If a shape corresponding to the input gesture is found in Table 2, the controller 801 may determine that a second gesture has been input to the second area. However, if the shape corresponding to the input gesture is not found in Table 2, the controller 801 may determine that no second gesture has been input to the second area.

According to various examples of the present disclosure, if no gesture has been input to the second area within the predetermined time period, the controller 801 may determine that no second gesture has been input to the second area.

If no second gesture has been input to the second area, the controller 801 may stop the hovering function with respect to the second area, thereby deactivating the second area.

If the controller 801 may determine that a second gesture has been input to the second area, the controller 801 may execute a function corresponding to the second gesture among the plurality of functions that are provided by the application being executed. For example, as illustrated in the screen 219 of FIG. 2B, if a "-"-shaped second gesture of dragging from the left to the right is input while a certain music file (e.g., "3. Someone like you") is played, the electronic device 101 may play a music file (e.g., "4. Tuning table") following the music file, and display a play screen in the first area 227, as illustrated in the screen 225.

According to the second example of the present disclosure, the controller 801 may display a home screen in the first area. Thereafter, the controller 801 may determine whether a request for activating the second area is received. For example, if a predetermined button of the electronic device 101 is pressed or a predetermined icon displayed in the first area is touched by a user, the controller 801 may determine that a request for activating the second area has been received.

If the controller 801 determines that a request for activating the second area has been received, the controller 801 may activate the second area using the hovering function. For example, as illustrated in the screen 201 of FIG. 2A, if the predetermined icon 205 is touched or the predetermined button 207 is pressed by the user, the controller 801 may activate the second area 213, as illustrated in the screen 209.

Thereafter, the controller 801 may determine whether a first gesture is input to the second area by the user within a predetermined time period. According to various examples of the present disclosure, the first gesture may be input through the cover 105 coupled with the electronic device 101.

For example, if a gesture has been input through the second area, the controller 801 may determine whether a first gesture has been input to the second area with reference to Table 1 stored in the memory unit 507. If a shape corresponding to the input gesture is found in Table 1, the controller 801 may determine that a first gesture has been input to the second area. However, if the shape corresponding to the input gesture is not found in Table 1, the controller 801 may determine that no first gesture has been input onto the second area.

According to various examples of the present disclosure, if no gesture has been input through the second area within the predetermined time period, the controller 801 may determine that no first gesture has been input onto the second area.

If the controller 801 determines that no first gesture has been input, the controller 801 may stop the hovering function with respect to the second area, thereby deactivating the second area.

If the controller 801 determines that a first gesture has been input, the controller 801 may execute an application corresponding to the first gesture among the plurality of applications executable in the electronic device 101, and display an execution screen of the executed application in the first area. Thereafter, the controller 801 may divide (e.g., virtually divide) the second area into a plurality of areas and respectively map a plurality of functions of the application being executed to the divided areas.

For example, as illustrated in the screen 215 of FIG. 2B, if a first gesture of an "○" shape has been input, the controller 801 may execute a music player corresponding to the first gesture. Thereafter, as illustrated in the screen 229, the controller 801 may display a play screen of the music player, may divide the second area into three areas, and then may respectively map a play function, a go-to-next song function, and a back function of the music player to the three areas.

Thereafter, the controller 801 may determine whether one of the divided areas is selected by the user within a predetermined time period.

If none of the divided areas is selected, the controller 801 may stop the hovering function with respect to the second area, thereby deactivating the second area.

In contrast, if one of the divided areas is selected, the controller 801 may execute a function corresponding to the selected area among the plurality of functions that are provided by the application being executed. For example, as illustrated in the screen 229 of FIG. 2B, if the area 235 to which the go-to-next song function is mapped among the three areas 233, 234, and 235 is selected while a certain music file (e.g., "3. Someone like you") is played, the controller 801 may play a music file (e.g., "4. Turning table") following the music file, and display a play screen of the following music file in the first area 227, as illustrated in the screen 225.

According to the third example of the present disclosure, the controller 801 may determine whether an event is generated. According to various examples of the present disclosure, the event may include an internal event and an external event. The external event may be an event that is generated by an external device or a user, for example, a case in which a predetermined button is pressed by a user, or a case in which predetermined data is received from an external device. The internal event may be an event that is generated in the electronic device 101, and may be an alarm event of a clock, a schedule notify event of a calendar, and/or the like. The predetermined button may be a button for requesting activation of the first area and the second area, and the predetermined data may be a text message (e.g., a short message, a multimedia message, or a call signal), E-mail, and/or the like.

If the controller 801 determines that an event has been generated, the controller 801 may determine whether the cover 105 has been closed.

If the controller 801 determines that the cover 105 has been opened, the controller 801 may perform a function corresponding to the generated event. For example, if the generated event is an event of receiving a text message, the controller 801 may display a part of content of the received text message in a part of an entire screen.

If the controller 801 determines that the cover 105 has been closed, the controller 801 may activate both the first and second areas using the hovering function. The first area may be a part of an entire screen of the electronic device 101. For example, as illustrated in the screen 501 of FIG. 5, if the predetermined button 505 is pressed by the user, the electronic device 101 may activate both the first area 509 and the second area 511, as illustrated in the screen 507.

Thereafter, the controller 801 may determine whether a first gesture is input to the second area by the user within a predetermined time period. The first gesture may be input through the cover 105 coupled with the electronic device 101.

For example, if a gesture has been input through the second area, the controller 801 may determine whether a first gesture has been input to the second area using Table 1 stored in the memory unit 507. If a shape corresponding to the input gesture is found in Table 1, the controller 801 may determine that the first gesture has been input to the second area. However, if the shape corresponding to the input gesture is not found in Table 1, the controller 801 may determine that no first gesture has been input to the second area.

According to various examples of the present disclosure, if no gesture has been input to the second area within the predetermined time period, the controller 801 may determine that no first gesture has been input to the second area.

If the controller 801 determines that no first gesture has been input, the controller 801 may stop the hovering function with respect to the second area, thereby deactivating the second area. According to various examples of the present disclosure, deactivating the second area may correspond to lowering touch sensitivity of the second area to touch sensitivity of before the second area is activated.

If the controller 801 determines that a first gesture has been input, the controller 801 may execute an application corresponding to the first gesture among the plurality of applications executable in the electronic device 101, display an execution screen of the executed application in the first area. For example, as illustrated in the screen 215 of FIG. 2B, if a first gesture of a "○" shape has been input, the controller 801 may execute a music player corresponding to the first gesture, and display a play screen of the music player in the first screen 221, as illustrated in the screen 219.

Thereafter, the controller 801 may determine whether a second gesture is input to the second area by the user within a predetermined time period. The second gesture may be input through the cover 105 coupled with the electronic device 101.

For example, if a gesture has been input though the second area, the controller 801 may determine whether a second gesture has been input to the second area with reference to Table 2 representing a correlation between second gestures and functions of a predetermined application. If a shape corresponding to the input gesture is found in Table 2, the controller 801 may determine that a second gesture has been input to the second area. However, if the shape corresponding to the input gesture is not found in Table 2, the controller 801 may determine that no second gesture has been input to the second area.

According to various examples of the present disclosure, if no gesture has been input to the second area within the predetermined time period, the controller 801 may determine that no second gesture has been input to the second area.

If the controller 801 determines that no second gesture has been input onto the second area, the controller 801 may stop the hovering function with respect to the first and second areas, thereby deactivating the first and second areas.

If the controller 801 determines that a second gesture has been input, the controller 801 may execute a function corresponding to the second gesture among the plurality of functions that are provided by the application being executed. For example, as illustrated in the screen 219 of FIG. 2B, if a "-"-shaped second gesture of dragging from the left to the right is input while a certain music file (e.g., "3. Someone like you") is played, the controller 801 may play a music file (e.g., "4. Tuning table") following the music file, and may display a play screen of the following music file in the second area 227, as illustrated in the screen 225 of FIG. 2B.

According to the fourth example of the present disclosure, the controller 801 may determine whether an event is generated. If the controller 801 determines that an event has been generated, the controller 801 may determine whether the cover 105 has been closed.

If the controller 801 determines that the cover 105 has been opened, the controller 105 may execute a function corresponding to the generated event. For example, if the generated event is an event of receiving a text message and/or the like, the electronic device 101 may display a part of content of the received text message in a part of an entire screen.

If the controller 801 determines that the cover 105 has been closed, the controller 801 may activate both the first and second areas using the hovering function. For example, in the screen 501 of FIG. 5, if the predetermined button 505 is pressed by a user, the electronic device 101 may activate both the first area 509 and the second area 511, as illustrated in the screen 507.

Thereafter, the controller 801 may determine whether a first gesture is input to the second area within a predetermined time period. The first gesture may be input through the cover 105 coupled with the electronic device 101.

For example, if a gesture has been input through the second area, the controller 801 may determine whether a first gesture has been input to the second area with reference to Table 1 stored in the memory unit 507. If a shape corresponding to the input gesture is found in Table 1, the controller 801 may determine that a first gesture has been input to the second area. However, if the shape corresponding to the input gesture is not found in Table 1, the controller 801 may determine that no first gesture has been input to the second area.

According to various examples of the present disclosure, if no gesture has been input to the second area within the predetermined time period, the controller 801 may determine that no first gesture has been input to the second area.

If the controller 801 determines that no first gesture has been input, the controller 801 may stop the hovering function with respect to the second area, thereby deactivating the second area.

If the controller 801 determines that a first gesture has been input, the controller 801 may execute an application corresponding to the first gesture among the plurality of application executable in the electronic device 101, and may display an execution screen of the executed application in the first area. Thereafter, the controller 801 may divide (e.g., virtually divide) the second area into a plurality of areas, and respectively map the plurality of functions of the application being executed to the divided areas.

For example, as illustrated in the screen 215 of FIG. 2B, if a first gesture of a "○" shape is input, the controller 801 may execute a music player corresponding to the first gesture. Thereafter, the controller 801 may display a play screen of the music player in the first area 221, divide the second area into three areas 233, 234, and 235, and respectively map a play function to the area 233, a go-to-next song function to the area 234, and a back function of the music player to the area 235, as illustrated in the screen 229.

Thereafter, the controller 801 may determine whether any one of the divided areas is selected by a user within a predetermined time period.

If none of the divided areas is selected, the controller 801 may stop the hovering function with respect to the first and second areas, thereby deactivating the first and second areas.

If one of the divided areas has been selected, the controller 801 may execute a function corresponding to the selected area among the plurality of functions that are provided by the application being executed. For example, as illustrated in the screen 229 of FIG. 2B, if the area 235 to which the go-to-next song function is mapped among the three areas 233, 234, and 235 is selected while a certain music file (e.g., "3. Someone like you") is played, the electronic device 101 may play a music file (e.g., "4. Turning table") following the music file, and display a play screen of the following music file in the first area 227, as illustrated in the screen 225.

According to the apparatus and method for executing the function in the electronic device, as described above, a user can execute various functions of the electronic device even when a cover of the electronic device is closed.

According to various examples of the present disclosure, the proposed apparatus and method for executing the function in the electronic device may be implemented as computer-readable code in a non-transitory computer-readable recording medium. The non-transitory computer-readable recording medium may include any kind of recording device storing computer-readable data. Examples of the recording medium may include Read Only Memory (ROM), Random Access Memory (RAM), optical disk, magnetic tape, floppy disk, hard disk, non-volatile memory. In addition, the non-transitory computer-readable recording medium may be distributed over the computer systems connected over the network, and computer-readable codes may be stored and executed in a distributed manner.

While the present disclosure has been shown and described with reference to various examples thereof, it will be understood by those skilled in the art that various changes in form and details may be made therein without departing from the scope of the present disclosure as defined by the appended claims.

## Claims

1. An apparatus configured to execute a function in an electronic device (101), the apparatus comprising:
a display unit (803) configured to display a home screen in a first area (203, 509) of an entire screen; and
a controller (801) configured to activate the first area and a second area of the entire screen if an event is generated while a cover (105) is operatively coupled with the electronic device and covering the second area, to determine whether a gesture is input to the second area through the cover (105) operatively coupled with the electronic device and covering the second area, and to execute an application corresponding to the gesture if the gesture has been input to the second area, and display an execution screen of the executed application in the first area,
wherein the event includes an event in which predetermined data is received from an external device.

2. The apparatus of claim 1, wherein the event further includes at least one of an event in which an icon (205) is displayed on the home screen, and an event in which a button of the electronic device is selected.

3. The apparatus of claim 1, wherein, if a gesture is input to the second area through the cover (105) while the application is executed, the controller (801) executes a function of the application,
wherein the function corresponds to the gesture.

4. The apparatus of claim 1, wherein, if the application is executed, the controller (801) divides the second area into a plurality of areas (233, 234, 235, 257), and respectively maps a plurality of functions of the application to the plurality of divided areas.

5. The apparatus of claim 4, wherein, if one of the divided areas is selected through the cover (105) while the application is executed, the controller executes a function of the application,
wherein the function corresponds to the selected area.

6. The apparatus of claim 1, wherein, if no gesture is input within a predetermined time period, the controller (801) deactivates the second area.

7. A method of executing a function in an electronic device, the method comprising:
displaying a home screen in a first area of an entire screen;
activating (605, 705) the first area and second area of the entire screen if (601, 701) an event is generated while a cover (105) is operatively coupled with the electronic device and covering the second area;
determining (607, 707) whether a gesture is input to the second area through the cover operatively coupled with the electronic device and covering the second area; and
executing (609, 709) an application corresponding to the gesture, if the gesture has been input to the second area, and
displaying (611, 711) an execution screen of the executed application in the first area, wherein the event includes an event in which predetermined data is received from an external device.

8. The method of claim 7, wherein the event further includes at least one of an event in which an icon is displayed on the home screen, and an event in which a button of the electronic device is selected.

9. The method of claim 7, further comprising:
if (613, 715) a gesture is input to the second area through the cover while the application is executed, executing (615, 717) a function of the application,
wherein the function corresponds to the gesture.

10. The method of claim 7, further comprising:
if the application is executed, dividing (713) the second area into a plurality of areas, and respectively mapping a plurality of functions of the application to the plurality of divided areas.

11. The method of claim 10, further comprising:
if one of the divided areas is selected through the cover while the application is executed, executing (717) a function of the application, the function corresponding to the selected area.

12. The method of claim 7, further comprising:
deactivating (619, 721) the second area if no gesture is input within a predetermined time period.

## Patentansprüche

1. Vorrichtung, die konfiguriert ist, eine Funktion in einem elektronischen Gerät (101) auszuführen, wobei die Vorrichtung Folgendes umfasst:
eine Anzeigeeinheit (803), die konfiguriert ist, in einem ersten Gebiet (203, 509) eines Gesamtbildschirms einen Startbildschirm anzuzeigen; und
eine Steuerung (801), die konfiguriert ist, das erste Gebiet und ein zweites Gebiet des Gesamtbildschirms zu aktivieren, wenn ein Ereignis erzeugt wird, während eine Abdeckung (105) wirkend mit dem elektronischen Gerät gekoppelt ist und das zweite Gebiet abdeckt, zu ermitteln, ob durch die Abdeckung (105) hindurch, die wirkend mit dem elektronischen Gerät gekoppelt ist und das zweite Gebiet abdeckt, eine Geste in das zweite Gebiet eingegeben wird, und eine Anwendung auszuführen, die der Geste entspricht, wenn die Geste in das zweite Gebiet eingegeben worden ist,
und einen Ausführungsbildschirm der ausgeführten Anwendung im ersten Gebiet anzuzeigen,
wobei das Ereignis ein Ereignis beinhaltet, bei dem vorgegebene Daten von einem externen Gerät empfangen werden.

2. Vorrichtung nach Anspruch 1, wobei das Ereignis ferner mindestens eines von einem Ereignis, bei dem ein Symbol (205) auf dem Startbildschirm angezeigt wird, und einem Ereignis beinhaltet, bei dem eine Taste des elektronischen Gerätes ausgewählt wird.

3. Vorrichtung nach Anspruch 1, wobei, wenn durch die Abdeckung (105) hindurch eine Geste in das zweite Gebiet eingegeben wird, während die Anwendung ausgeführt wird, die Steuerung (801) eine Funktion der Anwendung ausführt,
wobei die Funktion der Geste entspricht.

4. Vorrichtung nach Anspruch 1, wobei, wenn die Anwendung ausgeführt wird, die Steuerung (801) das zweite Gebiet in mehrere Gebiete (233, 234, 235, 257) teilt und mehrere Funktionen der Anwendung jeweils auf die mehreren geteilten Gebiete abbildet.

5. Vorrichtung nach Anspruch 4, wobei, wenn durch die Abdeckung (105) hindurch eines der geteilten Gebiete ausgewählt wird, während die Anwendung ausgeführt wird, die Steuerung eine Funktion der Anwendung ausführt,
wobei die Funktion dem ausgewählten Gebiet entspricht.

6. Vorrichtung nach Anspruch 1, wobei, wenn innerhalb einer vorgegebenen Zeitdauer keine Geste eingegeben wird, die Steuerung (801) das zweite Gebiet deaktiviert.

7. Verfahren des Ausführens einer Funktion in einem elektronischen Gerät, wobei das Verfahren Folgendes umfasst:
Anzeigen eines Startbildschirms in einem ersten Gebiet eines Gesamtbildschirms;
Aktivieren (605, 705) des ersten Gebietes und zweiten Gebietes des Gesamtbildschirms, wenn (601, 701) ein Ereignis erzeugt wird, während eine Abdeckung (105) wirkend mit dem elektronischen Gerät gekoppelt ist und das zweite Gebiet abdeckt;
Ermitteln (607, 707), ob durch die Abdeckung hindurch, die wirkend mit dem elektronischen Gerät gekoppelt ist und das zweite Gebiet abdeckt, eine Geste in das zweite Gebiet eingegeben wird; und
Ausführen (609, 709) einer Anwendung, die der Geste entspricht, wenn die Geste in das zweite Gebiet eingegeben worden ist, und
Anzeigen (611, 711) eines Ausführungsbildschirms der ausgeführten Anwendung im ersten Gebiet,
wobei das Ereignis ein Ereignis beinhaltet, bei dem vorgegebene Daten von einem externen Gerät empfangen werden.

8. Verfahren nach Anspruch 7, wobei das Ereignis ferner mindestens eines von einem Ereignis, bei dem ein Symbol auf dem Startbildschirm angezeigt wird, und einem Ereignis beinhaltet, bei dem eine Taste des elektronischen Gerätes ausgewählt wird.

9. Verfahren nach Anspruch 7, das ferner Folgendes umfasst:
wenn (613, 715) durch die Abdeckung hindurch eine Geste in das zweite Gebiet eingegeben wird, während die Anwendung ausgeführt wird, Ausführen (615, 717) einer Funktion der Anwendung,
wobei die Funktion der Geste entspricht.

10. Verfahren nach Anspruch 7, das ferner Folgendes umfasst:
wenn die Anwendung ausgeführt wird, Teilen (713) des zweiten Gebietes in mehrere Gebiete und Abbilden mehrerer Funktionen der Anwendung jeweils auf die mehreren geteilten Gebiete.

11. Verfahren nach Anspruch 10, das ferner Folgendes umfasst:
wenn durch die Abdeckung hindurch eines der geteilten Gebiete ausgewählt wird, während die Anwendung ausgeführt wird, Ausführen (717) einer Funktion der Anwendung, wobei die Funktion dem ausgewählten Gebiet entspricht.

12. Verfahren nach Anspruch 7, das ferner Folgendes umfasst:
Deaktivieren (619, 721) des zweiten Gebietes, wenn innerhalb einer vorgegebenen Zeitdauer keine Geste eingegeben wird.

## Revendications

1. Appareil configuré pour exécuter une fonction dans un dispositif électronique (101), l'appareil comprenant :
une unité d'affichage (803) configurée pour afficher un écran d'accueil dans une première zone (203, 509) d'un écran complet ; et
un organe de commande (801) configuré pour activer la première zone et une deuxième zone de l'écran complet si un événement est généré pendant qu'un couvercle (105) est couplé, de manière opérationnelle, au dispositif électronique et recouvre la deuxième zone, pour déterminer si un geste est entré dans la deuxième zone à travers le couvercle (105) couplé, de manière opérationnelle, au dispositif électronique et recouvrant la deuxième zone, pour exécuter une application correspondant au geste si le geste a été entré dans la deuxième zone, et pour afficher un écran d'exécution de l'application exécutée dans la première zone,
dans lequel l'événement comprend un événement dans lequel des données prédéterminées sont reçues en provenance d'un dispositif externe.

2. Appareil selon la revendication 1, dans lequel l'événement comprend en outre au moins l'un d'un événement dans lequel une icône (205) est affichée sur l'écran d'accueil, et un événement dans lequel un bouton du dispositif électronique est sélectionné.

3. Appareil selon la revendication 1, dans lequel, si un geste est entré dans la deuxième zone à travers le couvercle (105) pendant que l'application est exécutée, l'organe de commande (801) exécute une fonction de l'application,
dans lequel la fonction correspond au geste.

4. Appareil selon la revendication 1, dans lequel, si l'application est exécutée, l'organe de commande (801) divise la deuxième zone en une pluralité de zones (233, 234, 235, 257), et met une pluralité de fonctions de l'application en concordance respectivement avec la pluralité de zones divisées.

5. Appareil selon la revendication 4, dans lequel, si l'une des zones divisées est sélectionnée à travers le couvercle (105) pendant que l'application est exécutée, l'organe de commande exécute une fonction de l'application,
dans lequel la fonction correspond à la zone sélectionnée.

6. Appareil selon la revendication 1, dans lequel, si aucun geste n'est entré au cours d'une période de temps prédéterminée, l'organe de commande (801) désactive la deuxième zone.

7. Procédé d'exécution d'une fonction dans un dispositif électronique, le procédé comprenant :
l'affichage d'un écran d'accueil dans une première zone d'un écran complet ;
l'activation (605, 705) de la première zone et d'une deuxième zone de l'écran complet si (601, 701) un événement est généré pendant qu'un couvercle (105) est couplé, de manière opérationnelle, au dispositif électronique et recouvre la deuxième zone ;
la détermination (607, 707) si un geste est entré dans la deuxième zone à travers le couvercle couplé, de manière opérationnelle, au dispositif électronique et recouvrant la deuxième zone ;
l'exécution (609, 709) d'une application correspondant au geste si le geste a été entré dans la deuxième zone, et
l'affichage (611, 711) d'un écran d'exécution de l'application exécutée dans la première zone,
dans lequel l'événement comprend un événement dans lequel des données prédéterminées sont reçues en provenance d'un dispositif externe.

8. Procédé selon la revendication 7, dans lequel l'événement comprend en outre au moins l'un d'un événement dans lequel une icône est affichée sur l'écran d'accueil, et un événement dans lequel un bouton du dispositif électronique est sélectionné.

9. Procédé selon la revendication 7, comprenant en outre :
si (613, 715) un geste est entré dans la deuxième zone à travers le couvercle pendant que l'application est exécutée, l'exécution (615, 717) d'une fonction de l'application,
dans lequel la fonction correspond au geste.

10. Procédé selon la revendication 7, comprenant en outre :
si l'application est exécutée, la division (713) de la deuxième zone en une pluralité de zones, et la mise d'une pluralité de fonctions de l'application en concordance respectivement avec la pluralité de zones divisées.

11. Procédé selon la revendication 10, comprenant en outre :
si l'une des zones divisées est sélectionnée à travers le couvercle pendant que l'application est exécutée, l'exécution (717) d'une fonction de l'application, la fonction correspondant à la zone sélectionnée.

12. Procédé selon la revendication 7, comprenant en outre :
la désactivation (619, 721) de la deuxième zone si aucun geste n'est entré au cours d'une période de temps prédéterminée.
